# EUROPEAN PATENT SPECIFICATION

(11) **EP 1 195 263 B1**
(45) Date of publication and mention of the grant of the patent: **08.08.2007**
(21) Application number: 01926069.4
(22) Date of filing: 27.04.2001
(51) Int. Cl.: B41N 10/02

(54) **A METHOD FOR MANUFACTURING A BLANKET FOR PRINTING**
VERFAHREN ZUR HERSTELLUNG EINES DRUCKTUCHS
METHODE DE PRODUCTION D'UN BLANCHET D'IMPRIMERIE

(30) Priority: 28.04.2000 JP 2000130205; 08.06.2000 JP 2000171581
(43) Date of publication of application: 10.04.2002
(73) Proprietor: Kabushiki Kaisha Meiji Gomu Kasei, Shinjuku-ku, Tokyo 163-0916 (JP)
(72) Inventor: Iwasaki, Yoshio c/o Honsha Factory, Ashigarakami-gun Kanagawa 258-0026 (JP)
(74) Representative: Godwin, Edgar James
(86) International application number: PCT/JP2001/003744
(87) International publication number: WO 2001/083236

(56) References cited:
- JP-A- 10 272 860
- JP-A- 2000 086 823
- DATABASE WPI Section Ch, Week 199305 Derwent Publications Ltd., London, GB; Class A28, AN 1993-042309 XP002371290 & JP 04 369584 A (FUJIKURA RUBBER WORKS LTD) 22 December 1992 (1992-12-22)
- PATENT ABSTRACTS OF JAPAN vol. 1998, no. 09, 31 July 1998 (1998-07-31) & JP 10 109481 A (KIN YOSHA KK), 28 April 1998 (1998-04-28)
- PATENT ABSTRACTS OF JAPAN vol. 006, no. 050 (M-120), 3 April 1982 (1982-04-03) & JP 56 164893 A (NICHIYOU KEORI KK), 18 December 1981 (1981-12-18)
- PATENT ABSTRACTS OF JAPAN vol. 013, no. 217 (M-828), 22 May 1989 (1989-05-22) & JP 01 034794 A (NICHIYOU KEORI KK), 6 February 1989 (1989-02-06)
- DATABASE WPI Section Ch, Week 198518 Derwent Publications Ltd., London, GB; Class A88, AN 1985-108405 XP002371291 & JP 60 012959 B (MST KK) 4 April 1985 (1985-04-04)

## Description

### Technical Field

This invention relates to a method of manufacturing a blanket for printing which is used in offset printing and, more specifically, an economical blanket for printing which has improved adhesions among a surface layer as a printing surface, a supporting layer and a reinforcing layer and excellent durability against repeated compression and having the number of laminated woven fabrics constituting the reinforcing layer reduced.

### Background Art

Offset printing comprises transferring an image from a press plate to a blanket once and printing the image transferred onto the blanket on the surface of paper. Therefore, when a blanket mounted on a blanket cylinder becomes loose or misaligned during operation, a displacement also occurs on the printed image. For this reason, a blanket for printing must be not only easily mountable on the blanket cylinder but also securely fixed to the cylinder after mounted. Such a blanket for printing is classified into a compressible blanket for printing and an incompressible blanket for printing. The compressible blanket for printing is formed by forming a compressible layer on a reinforcing layer comprising a plurality of woven fabrics and forming a surface layer as a printing layer on the compressible layer via a supporting layer. Meanwhile, the incompressible blanket for printing is formed by forming a surface layer as a printing surface on a reinforcing layer comprising a plurality of woven fabrics via a supporting layer.

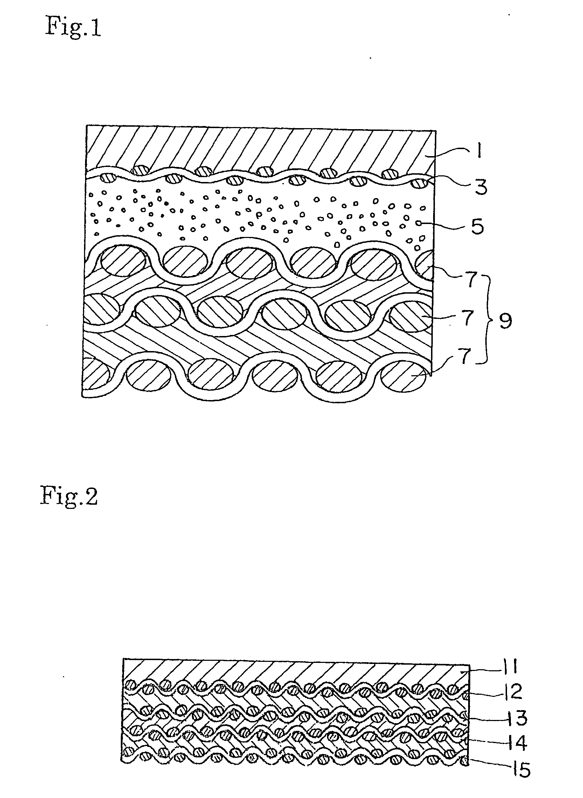

For example, as shown in Fig. 1, a compressible blanket for printing has a compressible layer 5 as a foamed layer formed underneath a surface layer 1 as a printing surface via a supporting layer 3 comprising a layer of woven fabric. The compressible layer 5 is supported by a reinforcing layer 9 formed by laminating three layers of woven fabrics 7. Further, as the blanket woven fabrics constituting the above reinforcing layer, woven fabrics formed by cotton yarns which have been stretched and have residual elongation reduced so as to obtain shape stability after the blanket is mounted on the blanket cylinder are used.

As the supporting layer 3 which is laminated on the underside of the surface later, a woven fabric having some residual elongation is used in consideration of the ease of mounting on the blanket cylinder is used. Further, in the supporting layer 3, a woven fabric using a yarn with a small yarn number count is used so as to reduce the influence of blanket texture pattern on the surface layer. In such a supporting layer laminated on the underside of the surface layer, a woven fabric formed of a cotton yarn, an union yarn of a cotton yarn and a rayon, a rayon or the like is used in consideration of adhesion to the surface layer.

Meanwhile, in the case of the incompressible blanket for printing which has no compressible layer, the surface layer as a printing surface is formed by laminating the supporting layer directly on the reinforcing layer formed by laminating a plurality of woven fabrics. As the woven fabric constituting the above supporting layer, a woven fabric using a yarn with a small yarn number count is used so as to reduce the influence of blanket texture pattern on printing. Further, the woven fabrics other than the woven fabric laminated on the underside of the surface layer comprise a laminate of two or three woven fabrics which have been stretched and have residual elongation reduced so as to obtain shape stability after the blanket is mounted on the blanket cylinder.

In addition, in view of cost efficiency and ease of stretching, a cotton yarn having a long fiber length is mainly used as a warp in the woven fabric constituting the supporting layer.

However, along with an increase in the processing speed of a printer, the conventional blanket for printing has the following problem.

That is, along with the increase in the processing speed of the printer, the frequency of repeated compressive stress becomes high, and the degree of fatigue of the surface layer and the portion underneath and near the underside thereof becomes larger. When the degree of fatigue becomes large, the supporting layer 3 in the proximity of the surface layer 1 ruptures first, and the rupture of the supporting layer 3 then causes the surface layer 1 to rupture.

Particularly, when the blanket is to be mounted, it is fixed with both sides thereof held in the slits provided to the blanket cylinder. Therefore, compressive stress concentrates on its edge portions (portions bended at an acute angle at the edges of the slits) and the edges of both sides of printing paper when the printing paper passes. Consequently, the blanket has been liable to rupture at the edge portions of the blanket cylinder and the edges of the printing paper. Accordingly, in high-speed printing applications, a blanket having excellent durability against repeated compression, in other words, having excellent press resistance, is demanded.

When such a rupture occurs in the blanket, the blanket must be replaced, thereby degrading printing efficiency (productivity) significantly. However, a conventionally used woven fabric made of cotton or rayon cannot be said to have insufficient fatigue resistance to repeated compression and has a problem pertinent to the durability against repeated compression in high-speed printing. Under the circumstances, use of a high-strength yarn such as an aramid yarn or carbon yarn is considered for improving the durability of the supporting layer; however, its use causes a degradation in adhesion as well as a problem pertinent to cost efficiency.

A vinylon yarn is excellent from the viewpoint of cost efficiency, has good wettability to rubber and is expected to improve the adhesion to the surface layer. However, a conventional vinylon yarn has a short fiber length since it is produced by wet spinning, so that a yarn with a small yarn number count cannot be obtained. Therefore, a smooth woven fabric comprising a vinylon yarn with a small yarn number count which does not exert the influence of blanket texture pattern on the surface layer cannot be obtained.

Further, the increase in the speed of the printer also causes the following problem.

Along with the increase in the processing speed of the printer, the frequency of repeated compressive stress on the blanket becomes high, and the degree of settling (decrease in thickness) becomes larger. When the settling is large, a stable pressure at the time of printing cannot be secured. Further, along with the increase in the speed of the printer, damage to the blanket frequently occurs due to smashing (excess pressure) caused by the winding of paper around the blanket at the time of cutting the paper.

A leading cause of the settling of the blanket is the settling of the reinforcing layer itself. To reduce the settling of the reinforcing layer, a binder is caused to permeate through the woven fabrics constituting the reinforcing layer sufficiently and the air trapped in the reinforcing layer is substituted with the binder. In other words, to cause the binder to permeate through the woven fabrics sufficiently, the woven fabrics must have good wettability to rubber used as the binder. A yarn used in a woven fabric having good wettability may be a vinylon yarn. When a woven fabric comprising the vinylon yarn is used to form the supporting layer, the binder can be caused to permeate through the woven fabric sufficiently to substitute the air trapped in the supporting layer with the binder.

However, a spun yarn with a small yarn number count and a high modulus cannot be obtained from a conventional vinylon yarn obtained by wet spinning since the vinylon yarn has a short fiber length. Therefore, a woven fabric using such a spun yarn cannot secure the shape stability of the blanket after the blanket is mounted on the blanket cylinder. To improve the wettability to rubber, a currently mainly used method is conceivable which comprises degreasing a woven fabric of cotton yarns with an alkali, a solvent or the like. However, this method is not economical since a degreasing step must be additionally provided.

Meanwhile, in order to improve resistance to smashing, use of an aramid yarn or a carbon yarn is conceivable for improving the strength of the reinforcing layer. While these aramid yarn and carbon yarn have high strength, use thereof causes a reduction in adhesion and an increase in costs. Further, although an inexpensive blanket can be provided by decreasing the number of woven fabrics to be laminated, when the number of currently used woven fabrics to be laminated is decreased, the strength of the blanket as a product lowers, whereby the blanket may rupture at the time of mounting or during use. Use of a woven fabric using an aramid yarn or carbon yarn which is a high-strength yarn increases costs and is problematic from an economical point of view.

Further, when damage to the blanket due to the settling or smashing occurs, the blanket must be replaced, whereby printing efficiency (productivity) is significantly degraded.

JP 04 369584A discloses a blanket for printing which has a supporting layer comprising rubber reinforced by short vinylon fibres.

It would be desirable to be able to provide a blanket for printing which has sufficient adhesion and press resistance against repeated compression even in high-speed printing. Further, it would be desirable to be able to provide a blanket for printing which exhibits good permeation of a binder to the woven fabrics. In addition, it would be desirable to be able to provide an economical blanket for printing which has little settling and improved resistance to smashing at the time of cutting paper and which can reduce the number of woven fabrics constituting the supporting layer.

### Disclosure of the Invention

The present invention provides a method of manufacturing a blanket for printing, as set forth in claim 1.

In accordance with the invention, the warps of the woven fabric constituting the supporting layer are formed from a vinylon yarn and the vinylon yarn is a spun yarn spun by a wet solvent cooling gel spinning method.

Further, the blanket for printing may have a reinforcing layer comprising a plurality of woven fabrics laminated via elastic binder layers, wherein the warps of at least one of the woven fabrics constituting the reinforcing layer may be formed from a vinylon yarn which is a spun yarn spun by the wet solvent cooling gel spinning method.

The blanket for printing may be a compressible blanket for printing or an incompressible blanket for printing. In the case of the compressible blanket for printing which has a supporting layer disposed between a surface layer as a printing surface and a compressible layer, the vinylon yarn is applied to the above supporting layer and optionally one of the woven fabrics constituting the reinforcing layer. In the case of the incompressible blanket for printing, the warps of the woven fabrics are formed from a vinylon yarn, the vinylon yarn is a spun yarn spun by the wet solvent cooling gel spinning method, and these woven fabrics may be used in the uppermost layer (top fabric) which is the supporting layer of the reinforcing layer. Alternatively, the above reinforcing layer may comprise only two layers of woven fabrics whose warps may be formed from a vinylon yarn which is a spun yarn spun by the wet solvent cooling gel spinning method.

As the vinylon yarn which is a spun yarn spun by the wet solvent cooling gel spinning method, a spun yarn with a small yarn number count which is formed from a fiber having high strength and a long fiber length can be obtained. As a weft, the same vinylon yarn, which is a spun yarn spun by the wet solvent cooling gel spinning method, as used as the warp may be used. The vinylon yarn may also be used in combination with conventional cotton, rayon, polynosic or a polyester. The warps greatly contribute to the adhesion to the surface layer, and use of the vinylon yarn which is a spun yarn spun by the wet solvent cooling gel spinning method as the warps improves the wettability to rubber, thereby increasing the adhesion. Further, the warps also greatly contribute to the settling. Since the wettability to rubber is improved by the use of the vinylon yarn which is a spun yarn spun by the wet solvent cooling gel spinning method, the woven fabric constituting the supporting layer can be impregnated sufficiently with a binder to replace the air included in the woven fabric with the binder. Therefore, the settling is reduced and the adhesion is improved.

Further, as the vinylon yarn produced by the wet solvent cooling gel spinning method, a spun yarn with a small yarn number count which is a high-strength long fiber can be obtained. Thereby, a smooth woven fabric having high strength can be obtained by use of the vinylon yarn which is a spun yarn spun by the wet solvent cooling gel spinning method, and a supporting layer having little influence of blanket texture pattern on printing and having resistance to smashing can therefore be obtained. Further, use of the high-strength woven fabric can decreases the number of woven fabrics to be used and provide a more economical blanket.

In the surface layer of the blanket an oil-resistant polymer is used in consideration of printing ink, ink cleaner and the like. The surface layer can be formed from, for example, chloroprene rubber (CR), polysulfide rubber (T), polyacrylonitrile-butadiene rubber (NBR), fluorocarbon rubber (FKM), silicon rubber or the like. Such an oil-resistant polymer may contain at least one of a vulcanizing agent, a vulcanization accelerator, a reinforcing agent, an antioxidant and the like.

### Brief Description of the Drawings

Fig. 1 is an enlarged cross-sectional diagram for illustrating the blanket for printing in Examples 1 and 2.
Fig. 2 is an enlarged cross-sectional diagram for illustrating the blanket for printing in Example 3 and the subsequent Examples.

### Best Mode for Carrying out the Invention

### Examples

Specific examples of the present invention will be described hereinafter. Firstly, a blanket having an ordinary structure as shown in Fig. 1 was produced as the blanket, and the warps and wefts of the woven fabric constituting the supporting layer 3 in the proximity of the surface layer 1 are as shown in Table 1. Kuraron KIIEQ2 used in Examples 1 and 2 is a vinylon yarn which is made by Kuraray Co., Ltd. by means of a wet solvent cooling gel spinning method. The direction of the warp refers to the direction in which the blanket rotates when mounted on a blanket cylinder, and the direction of the weft refers to the axial direction of the blanket cylinder.

**Table 1**

| | | Comp. Ex. 1 | Comp. Ex. 2 | Example 1 | Example 2 |
|---|---|---|---|---|---|
| Warp | Material | Cotton (Egypt Comber) | Polynosic | Kuraron K IIEQ2 ^{*1} | Kuraron K IIEQ2 ^{*1} |
| | Raw Yarn | Yarn No. 60, 2-Twisted Yarn | Yarn No. 60, 2-Twisted Yarn | Yarn No. 60, 2-Twisted Yarn | Yarn No. 60, 2-Twisted Yarn |
| | Yarn Count | 110 Yarns/inch | 110 Yarns/inch | 108 Yarns/inch | 108 Yarns/inch |
| Weft | Material | Cotton (America Comber) | Cotton (America Comber) | Kuraron K IIEQ2 ^{*1} | Cotton (America Comber) |
| | Raw Yarn | Yarn No. 30, Single Yarn | Yarn No. 30, Single Yarn | Yarn No. 30, Single Yarn | Yarn No. 30, Single Yarn |
| | Yarn Count | 73 Yarns/inch | 73 Yarns/inch | 73 Yarns/inch | 73 Yarns/inch |

| | | | | | |
|---|---|---|---|---|---|
| *1: Made by Kuraray Co., Ltd. | | | | | |

The breaking strengths in the warp direction of the supporting layers used in the above Comparative Examples and Examples were measured. The measurement method was carried out in accordance with DIN53354. The samples had a width of 50 mm and a length of 320 mm, the spacing between calibration marks was 200 mm, and the pulling rate was 100 mm/min. The results of the measurements are shown in Table 2. As is obvious from Table 2, the supporting layers of Examples had significantly reinforced breaking strengths over those of Comparative Examples.

**Table 2**

| | Comp. Ex. 1 | Comp. Ex. 2 | Example 1 | Example 2 |
|---|---|---|---|---|
| Breaking strength (N/50mm) | 900 | 900 | 1,700 | 1,750 |

Then, the adhesive strengths in the warp direction of the supporting layers to the surface layers were measured. The measurement method was carried out in accordance with JIS K6256 "Peel Test of Fabric and Vulcanized Rubber". As samples, those backed by an instant adhesive to reinforce the surface layers and having a width of 25 mm and a length of 150 mm were used. The results of the measurements are shown in Table 3. As is obvious from Table 3, Examples had improved adhesive strengths over Comparative Examples. As for failures, only the cohesive failures of the surface layers occurred in Examples, and the adhesions between the surface layers and the woven fabrics were good.

**Table 3**

| | Comp. Ex. 1 | Comp. Ex. 2 | Example 1 | Example 2 |
|---|---|---|---|---|
| Adhesive strength (N/25.4mm) | 72 | 95 | 126 | 120 |
| Condition of failure of peeled portion | Failure at the interface between surface layer and woven fabric | Failure at the interface between surface layer and woven fabric | Cohesive failure of surface layer | Cohesive failure of surface layer |

Then, a repeated compression fatigue test was carried out in the following manner. As a compression fatigue tester, a bearer contact-type compression and rotation tester obtained by modifying the impression cylinder and blanket cylinder units of a printer was used, and the impression cylinder and blanket cylinder each had a cylinder diameter of 173 mm and a surface length of 414 mm.

The testing method was carried out in the following manner. Firstly, an underlay was placed on the blanket cylinder and the blanket was then placed around the cylinder so that the amount of compression of the blanket with nips would be 0.10 mm. Then, after allowed to rotate for a few minutes, the blanket was further compressed, and a sheet of paper having a thickness of 0.25 mm was stuck on the surface of the impression cylinder. Thereafter, the tester was allowed to rotate at a high rotational speed of 1,000 rpm. After rotated 5,000 times, the tester was stopped and the surface of the blanket was observed.

When problems such as ruptures and cracks were not observed on the surface, the tester was subjected to further rotation. The paper was removed after the tester rotated for a total of 10,000 times, and another sheet of paper having a thickness of 0.25 mm was again stuck on the surface of the impression cylinder to carry out the above test. The above test was repeated for every 10,000 rotations.

The results of the test are shown in Table 4. As is clear from Table 4, Examples undergone more rotations until the occurrence of cracks than Comparative Examples and exhibited improved resistance to compression fatigue over Comparative Examples.

**Table 4**

| | Comp. Ex. 1 | Comp. Ex. 2 | Ex. 1 | Ex. 2 |
|---|---|---|---|---|
| Number of Rotations | 10,000 | 15,000 | 125,000 | 110,000 |
| Until the Occurrence of Cracks | | | | |

As described in detail above, the present invention provides a blanket having a reinforced supporting layer whose adhesion to a surface layer has been improved without impairing the smoothness of the supporting layer and having excellent durability against repeated compression, i.e., press resistance, in high-speed printing.

Next, Example 3 will be described hereinafter. Firstly, a blanket having an ordinary structure shown in Fig. 2 was produced. The blanket was formed by laminating a top fabric 12, a second center fabric 13, a first center fabric 14 and a bottom fabric 15 on the underside of a surface layer 11 in this order with a binder applied between any adjacent layers. The warps and wefts of woven fabrics used as reinforcing layers are as shown in Tables 5, 7 and 9. The reinforcing layer comprises the top fabric 12, the second center fabric 13, the first center fabric 14 and the bottom fabric 15. Kuraron KIIEQ2 used in Examples is a vinylon yarn which is made by Kuraray Co., Ltd. by means of a wet solvent cooling gel spinning method.

The direction of the warp refers to the direction in which the blanket rotates when mounted on a blanket cylinder, and the direction of the weft refers to the axial direction of the blanket cylinder.

Firstly, measurements of adhesion between the layers were conducted on Comparative Examples 3 and 4 and Examples 3 and 4. The constitutions of the warps and wefts of the woven fabrics are as shown in Table 5.

**Table 5**

| | | | Comp. Ex. 3 | Comp. Ex. 4 | Example 3 | Example 4 |
|---|---|---|---|---|---|---|
| Top Fabric | Warp | Material | Cotton (Egypt Comber) | Polynosic | ← | Kuraron K IIEQ2 *¹ |
| | | Raw Yarn | Yarn No. 60, 2-Twisted Yarn | Yarn No. 60, 2-Twisted Yarn | ← | Yarn No. 60, 2-Twisted Yarn |
| | | Yarn | 110 Yarns/inch | 110 Yarns/inch | ← | 108 Yarns/inch |
| | Weft | Material | Cotton (America Comber) | ← | ← | Kuraron K IIEQ2 ^{*1} |
| | | Raw Yarn | Yarn No. 30, Single Yarn | ← | ← | Yarn No. 30, Single Yarn |
| | | Yarn Count | 73 yarns/inch | ← | ← | 73 Yarns/inch |
| Second Center Fabric | Warp | Material | Cotton (Egypt Comber) | Cotton (Egypt Comber) | Kuraron K IIEQ2 ^{*1} | ← |
| | | Raw Yarn | Yarn No. 60, 4-Twisted Yarn | Yarn No. 60, 6-Twisted Yarn | Yarn No. 60, 4-Twisted Yarn | ← |
| | | Yarn Count | 77 Yarns/inch | 58 Yarns/inch | 80 Yarns/inch | ← |
| | Weft | Material | Cotton (America Comber) | Cotton (America Comber) | Cotton (America Comber) | Kuraron K IIEQ2 *¹ |
| | | Raw Yarn | Yarn No. 30, Single Yarn | Yarn No. 30, Single Yarn | Yarn No. 30, Single Yarn | Yarn No. 30, Single Yarn |
| | | Yarn Count | 57 Yarns/inch | 56 Yarns/inch | 57 Yarns/inch | 57 Yarns/inch |
| First Center Fabric | Warp | Material | Cotton (Egypt Comber) | Polynosic | Kuraron K IIEQ2 ^{*1} | ← |
| | | Raw Yarn | Yarn No. 60, 4-Twisted Yarn | Yarn No. 60, 2-Twisted Yarn | Yarn No. 60, 4-Twisted Yarn | ← |
| | | Yarn Count | 77 yarns/inch | 110 Yarns/inch | 80 Yarns/inch | ← |
| | Weft | Material | Cotton (America Comber) | Cotton (America Comber) | Cotton (America Comber) | Kuraron K IIEQ2 *¹ |
| | | Raw Yarn | Yarn No. 30, Single Yarn | Yarn No. 30, Single Yarn | Yarn No. 30, Single Yarn | Yarn No. 30, Single Yarn |
| | | Yarn Count | 57 Yarns/inch | 73 Yarns/inch | 57 Yarns/inch | 57 Yarns/inch |
| Bottom Fabric | Warp | Material | Cotton (Egypt Comber) | ← | Kuraron K IIEQ2 ^{*1} | ← |
| | | Raw Yarn | No. 60, 6-Twisted Yarn | ← | Yarn No. 60, 4-Twisted Yarn | ← |
| | | Yarn Count | 58 Yarns/inch | ← | 80 Yarns/inch | ← |
| | Weft | Material | Cotton (America Comber) | ← | Cotton (America Comber) | Kuraron K IIEQ2 *¹ |
| | | Raw Yarn | Yarn No. 40, 2-Twisted Yarn | ← | Yarn No. 30, Single Yarn | Yarn No. 30, Single Yarn |
| | | Yarn Count | 56 Yarns/inch | ← | 57 Yarns/inch | 57 Yarns/inch |

| | | | | | | |
|---|---|---|---|---|---|---|
| *1: Made by Kuraray Co., Ltd. | | | | | | |

The measurement method was carried out in accordance with JIS K6256 "Peel Test of Fabric and Vulcanized Rubber". The samples each had a width of 25 mm and a length of 150 mm and were backed by fabrics with an instant adhesive to reinforce the surface layers. The pulling rate was determined in accordance with JIS K6256 "Peel Test of Fabric and Vulcanized Rubber". The results of the measurements are shown in Table 6. As is obvious from Table 6, Examples exhibited extremely higher adhesive strengths than Comparative Examples. As for failures, only the cohesive failures of the surface layers occurred after the test, and the interlayer adhesions were apparently improved.

**Table 6**

| | | Comp. Ex. 3 | Comp. Ex. 4 | Ex. 3 | Ex. 4 |
|---|---|---|---|---|---|
| Between Surface Rubber and Top fabric | Adhesive Strength (N/25.4mm) | 72 | 93 | 90 | 121 |
| | Condition of Failure of Peeled Portion | Failure at the Interface Between Surface Layer and Woven fabric | ← | ← | Cohesive Failure of Surface Layer |
| Between Surface Rubber and Second Center Fabric | Adhesive Strength (N/25.4mm) | 4.5 | 4.9 | 7.6 | 7.4 |
| | Condition of Failure of Peeled Portion | Failure at the Interface Between Woven fabrics | ← | Cohesive Failure of Binder Layer | ← |
| Between Second Center and First Center | Adhesive Strength (N/25.4mm) | 4.2 | 4.7 | 7.4 | 7.5 |
| | Condition of Failure of Peeled Portion | Failure at the Interface Between Woven fabrics | ← | Cohesive Failure of Binder Layer | ← |
| Between First Center and Bottom Fabric | Adhesive Strength (N/25.4mm) | 4.1 | 4.8 | 7.6 | 7.4 |
| | Condition of Failure of Peeled Portion | Failure at the Interface Between Woven fabrics | ← | Cohesive Failure of Binder Layer | ← |

Then, reductions in the woven fabrics constituting the supports and the strengths in the warp direction were measured. In Example 5, the first center fabric 14 was removed, and in Example 6, the first center fabric 14 and the second center fabric 13 were removed. The constitutions of the woven fabrics were as shown in Table 7.

**Table 7**

| | | | Comp. Ex. 3 | Example 3 | Example 5 | Example 6 |
|---|---|---|---|---|---|---|
| Top Fabric | Warp | Material | Cotton (Egypt Comber) | ← | Kuraron K IIEQ2 ^{*1} | ← |
| | | Raw Yarn | Yarn No. 60, 2-Twisted Yarn | ← | Yarn No. 60, 2-Twisted Yarn | ← |
| | | Yarn Count | 110 Yarns/inch | ← | 108 Yarns/inch | ← |
| | Weft | Material | Cotton (America Comber) | ← | ← | ← |
| | | Raw Yarn | Yarn No. 30, Single Yarn | ← | ← | ← |
| | | Yarn Count | 73 Yarns/inch | ← | ← | ← |
| Second Center Fabric | Warp | Material | Cotton (Egypt Comber) | Kuraron K IIEQ2 ^{*1} | ← | |
| | | Raw Yarn | Yarn No. 60, 4-Twisted Yarn | Yarn No. 40, 4-Twisted Yarn | ← | |
| | | Yarn Count | 77 Yarns/inch | 80 Yarns/inch | ← | |
| | Weft | Material | Cotton (America Comber) | Cotton (America Comber) | ← | |
| | | Raw Yarn | Yarn No. 30, Single Yarn | Yarn No. 30, Single Yarn | ← | |
| | | Yarn Count | 57 Yarns/inch | 57 Yarns/inch | | |
| First Center Fabric | Warp | Material | Cotton (Egypt Comber) | Kuraron K IIEQ2 ^{*1} | | |
| | | Raw Yarn | Yarn No. 60, 4-Twisted Yarn | Yarn No. 60, 4-Twisted Yarn | | |
| | | Yarn Count | 77 Yarns/inch | 80 Yarns/inch | | |
| | Weft | Material | Cotton (America Comber) | Cotton (America Comber) | | |
| | | Raw Yarn | Yarn No. 30, Single Yarn | Yarn No. 30, Single Yarn | | |
| | | Yarn Count | 57 Yarns/inch | 57 Yarns/inch | | |
| Bottom Fabric | Warp | Material | Cotton (Egypt Comber) | Kuraron K IIEQ2 ^{*1} | Kuraron K IIEQ2 ^{*1} | ← |
| | | Raw Yarn | Yarn No. 60, 6-Twisted Yarn | Yarn No. 60, 4-Twisted Yarn | Yarn No. 60, 6-Twisted Yarn | ← |
| | | Yarn Count | 58 Yarns/inch | 80 Yarns/inch | 57 Yarns/inch | ← |
| | Weft | Material | Cotton (America Comber) | Cotton (America Comber) | Cotton (America Comber) | ← |
| | | Raw Yarn | Yarn No. 40, 2-Twisted Yarn | Yarn No. 30, Single Yarn | Yarn No. 40, 2-Twisted Yarn | ← |
| | | Yarn Count | 56 Yarns/inch | 57 Yarns/inch | 54 Yarns/inch | ← |

The measurement method was carried out in accordance with DIN53354. The samples had a width of 50 mm and a length of 320 mm, the spacing between calibration marks was 200 mm, and the pulling rate was 100 mm/min. The results of the measurements are shown in Table 8. As is obvious from Table 8, Examples had higher breaking strengths in the mounting direction (rotation direction) than Comparative Examples. Example 6 in which the reinforcing layer comprises only two layers had almost the same strength as that of Comparative Example 3 formed by laminating three layers of stretched woven fabrics and having high breaking strength. Therefore, by using a vinylon yarn which is a spun yarn spun by a wet solvent cooling gel spinning method as a warp, sufficient breaking strength can be maintained, and the number of woven fabrics constituting the support can be reduced.

**Table 8**

| | Comp. Ex. 3 | Ex. 3 | Ex. 5 | Ex. 6 |
|---|---|---|---|---|
| Breaking Strength | 5,500 | 8,500 | 7,200 | 5,600 |
| (N/50mm) | | | | |

Then, the settlings and smashing resistances of the supporting layers were measured. In Example 8, the reinforcing layer comprised only one layer of woven fabric. The constitutions of the woven fabrics are as shown in Table 9. As a tester, a compression and rotation tester (bearer contact-type) obtained by modifying the impression cylinder and blanket cylinder units of a printer was used, and the impression cylinder and blanket cylinder each had a cylinder diameter of 173 mm and a surface length of 414 mm.

**Table 9**

| | | | Example 7 | Example 8 |
|---|---|---|---|---|
| Top Fabric | Warp | Material | Cotton (Egypt Comber) | ← |
| | | Raw Yarn | Yarn No. 60, 2-Twisted Yarn | ← |
| | | Yarn Count | 110 Yarns/inch | ← |
| | Weft | Material | Cotton (America Comber) | ← |
| | | Raw Yarn | Yarn No. 30, Single Yarn | ← |
| | | Yarn Count | 73 Yarns/inch | ← |
| Second Center Fabric | Warp | Material | Cotton (Egypt Comber) | Kuraron K IIEQ2 *¹ |
| | | Raw Yarn | Yarn No. 60, 6-Twisted Yarn | Yarn No. 60, 4-Twisted Yarn |
| | | Yarn Count | 58 Yarns/inch | 80 Yarns/inch |
| | Weft | Material | Cotton (America Comber) | Cotton (America Comber) |
| | | Raw Yarn | Yarn No. 30, Single Yarn | Yarn No. 30, Single Yarn |
| | | Yarn Count | 56 Yarns/inch | 57 Yarns/inch |
| First Center Fabric | Warp | Material | Cotton (Egypt Comber) | ← |
| | | Raw Yarn | Yarn No. 60, 2-Twisted Yarn | ← |
| | | Yarn Count | 110 Yarns/inch | ← |
| | Weft | Material | Cotton (America Comber) | ← |
| | | Raw Yarn | Yarn No. 30, Single Yarn | ← |
| | | Yarn Count | 73 Yarns/inch | ← |
| Bottom Fabric | Warp | Material | Kuraron K IIEQ2 ^{*1} | ← |
| | | Raw Yarn | Yarn No. 60, 6-Twisted Yarn | ← |
| | | Yarn Count | 57 Yarns/inch | ← |
| | Weft | Material | Cotton (America Comber) | ← |
| | | Raw Yarn | Yarn No. 40, 2-Twisted Yarn | ← |
| | | Yarn Count | 54 Yarns/inch | ← |

The settling was measured in the following manner. An underlay was placed on the blanket cylinder, and the blanket was then placed around the cylinder. After allowed to rotate for a few minutes, the blanket was further compressed such that the amount of compression of the blanket with nips would be 0.20 mm. Thereafter, the tester was allowed to rotate at a high rotational speed of 1,000 rpm. After rotated for a total of 2,000,000 times, the tester was stopped, and the amount of change in the thickness (amount of settling) was measured by a cylinder gage. The results of the test are shown in Table 10.

**Table 10**

| | Comp. Ex. 3 | Comp. Ex. 4 | Ex. 3 | Ex. 5 | Ex. 6 | Ex. 7 | Ex. 8 |
|---|---|---|---|---|---|---|---|
| Amount of Settling after 2 million rotations (mm) | 0.07 | 0.07 | 0.04 | 0.03 | 0.04 | 0.05 | 0.04 |

As is obvious from the above table, Examples have smaller amounts of settlings than Comparative Examples. That is, Example 7, in which the bottom fabric comprises a woven fabric using a vinylon yarn which is a spun yarn spun by a wet solvent cooling gel spinning method as a warp and is used in place of those of Comparative Examples, has s smaller amount of settling than Comparative Examples. Even Example 8, in which the vinylon yarn which is a spun yarn spun by the wet solvent cooling gel spinning method is used as the warps of the bottom fabric and the second center fabric, apparently have a smaller amount of settling, and it can be seen that the amount of settling decreases as the number of laminated woven fabrics using the vinylon yarn which is a spun yarn spun by the wet solvent cooling gel spinning method as the warp increases.

The resistance to smashing was measured in the following manner. An underlay was placed on the blanket cylinder, and the blanket was then placed around the cylinder. Then, after allowed to rotate for a few minutes, the blanket was further compressed such that the amount of compression of the blanket with nips would be 0.10 mm. Then, a gage film having a thickness of 0.5 mm and a size of 50 mm x 50 mm was stuck on the surface of the impression cylinder. Thereafter, the tester was allowed to rotate at a high rotational speed of 1,000 rpm. After rotated 1,000 times, the tester was stopped and the blanket was allowed to recover for 30 minutes. After 30 minutes, the amounts of settlings of the portion (A) in contact with the gage film stuck on the impression cylinder of the blanket and the portion (B) not in contact with the gage film were measured by a cylinder gage. (A)-(B) was taken as the amount of settling by smashing. The results of the test are shown in Table 11.

**Table 11**

| | Comp. Ex. 3 | Comp. Ex. 4 | Ex. 3 | Ex. 5 | Ex. 6 | Ex. 7 | Ex. 8 |
|---|---|---|---|---|---|---|---|
| Amount of Settling by Smashing (mm) | 0.15 | 0.13 | 0.08 | 0.07 | 0.07 | 0.10 | 0.08 |

As is obvious from the above table, with respect to resistance to smashing as well, Example 7, in which the bottom fabric comprises the woven fabric using the vinylon yarn which is a spun yarn spun by the wet solvent cooling gel spinning method as a warp, has s smaller amount of settling by smashing than Comparative Examples. Even Example 8, in which the vinylon yarn which is a spun yarn spun by the wet solvent cooling gel spinning method is used as the warps of the bottom fabric and the second center fabric, apparently have a smaller amount of settling by smashing. Consequently, it can be seen that the amount of the settling by smashing decreases as the number of laminated woven fabrics using the vinylon yarn which is a spun yarn spun by the wet solvent cooling gel spinning method as the warp increases.

As described in detail above, according to the present invention, a binder permeates woven fabrics well, the amount of settling is kept small and the resistance to smashing at the time of cutting paper is improved by using a vinylon yarn which is a spun yarn spun by a wet solvent cooling gel spinning method as the warp of woven fabrics constituting a reinforcing layer. Further, since a high-strength reinforcing layer can be obtained, the number of woven fabrics constituting the reinforcing layer can be decreased, whereby an economical blanket for printing can be provided. In addition, when the vinylon yarn which is a spun yarn spun by the wet solvent cooling gel spinning method is used as the warp of a woven fabric (top fabric) constituting a supporting layer laminated on the underside of a surface layer, the adhesion of the supporting layer to the surface layer can be improved without impairing its smoothness, and the influence of blanket texture pattern on printing can be reduced. Furthermore, according to the method of the present invention, a blanket having excellent durability to repeated compression, i.e., press resistance, in high-speed printing can be obtained.

As described above, since the blanket for printing produced by the method of the present invention has improved adhesions among the surface layer as a printing surface, the supporting layer and the reinforcing layer, it is useful as a blanket having excellent durability against repeated compression and can be used as a blanket for a high-speed printing device.

## Claims

1. A method of manufacturing a blanket for printing, the blanket having a surface layer (1; 11) constituting a printing surface, the method comprising laminating woven fabrics (3, 7; 12-15) to constitute a reinforcing layer (9; 12-15) and a supporting layer (3; 12), the supporting layer being on the underside of the surface layer (1; 11), **characterised in that** the supporting layer (3; 12) is constituted by a woven fabric using, for the warps thereof, a vinylon yarn spun by a wet solvent cooling gel spinning method.

2. A method as claimed in claim 1, wherein the woven fabrics (7; 12-15) constituting the reinforcing layer (9; 12-15) are laminated via an elastic binder layer.

3. A method as claimed in claim 1 or 2, wherein a compressible layer (5) is provided between the supporting layer (3) and the reinforcing layer (9).

## Patentansprüche

1. Verfahren zur Herstellung eines Drucktuchs, wobei das Drucktuch eine Oberflächenschicht (1; 11) aufweist, die eine Druckfläche bildet, wobei das Verfahren das Laminieren von Geweben (3, 7; 12-15) zur Bildung einer Verstärkungsschicht (9: 12-15) und einer Trägerschicht (3; 12) aufweist, wobei die Trägerschicht an der Unterseite der Oberflächenschicht (1; 11) liegt, **dadurch gekennzeichnet, daß** die Trägerschicht (3; 12) durch ein Gewebe gebildet wird, für dessen Kettfäden ein Vinylongarn verwendet wird, das durch ein Kühlgel-Naßlösungsspinnverfahren gesponnen wird.

2. Verfahren nach Anspruch 1, wobei die Gewebe (7; 12-15), welche die Verstärkungsschicht (9: 12-15) bilden, mittels einer elastischen Bindemittelschicht laminiert werden.

3. Verfahren nach Anspruch 1 oder 2, wobei eine kompressible Schicht (5) zwischen der Trägerschicht (3) und der Verstärkungsschicht (9) vorgesehen wird.

## Revendications

1. Procédé de fabrication d'un blanchet pour l'impression, le blanchet comportant une couche de surface (1; 11) constituant une surface d'impression, le procédé comprenant l'empilement de tissus tissés (3, 7; 12-15) pour constituer une couche de renfort (9; 12-15) et une couche de support (3; 12), la couche de support étant sur le côté inférieur de la couche de surface (1; 11), **caractérisé en ce que** la couche de support (3; 12) est constituée par un tissu tissé qui utilise, pour sa chaîne, un fil en vinylon filé au moyen d'un procédé de filage par gel de refroidissement à solvant par voie humide.

2. Procédé selon la revendication 1, dans lequel les tissus tissés (7; 12-15) constituant la couche de renfort (9; 12-15) sont empilés via une couche de liaison élastique.

3. Procédé selon la revendication 1 ou 2, dans lequel une couche compressible (5) est prévue entre la couche de support (3) et la couche de renfort (9).
